# EUROPÄISCHE PATENTSCHRIFT

(11) **EP 3 534 131 B1**
(45) Veröffentlichungstag und Bekanntmachung des Hinweises auf die Patenterteilung: **02.06.2021**
(21) Anmeldenummer: 18159638.8
(22) Anmeldetag: 02.03.2018
(51) Int. Cl.: G01L 19/00, G01L 13/06, G01L 15/00, G01L 19/06, G01L 19/14

(54) **DRUCKSENSOR**
PRESSURE SENSOR
CAPTEUR DE PRESSION

(43) Veröffentlichungstag der Anmeldung: 04.09.2019
(73) Patentinhaber: Grundfos Holding A/S, 8850 Bjerringbro (DK)
(72) Erfinder: KJELDSEN, Sören, 8830 Tjele (DK)
(74) Vertreter: Patentanwälte Vollmann Hemmer Lindfeld Partnerschaft mbB

(56) Entgegenhaltungen:
- EP-A2- 2 088 414
- DE-A1- 4 107 347
- JP-A- 2006 105 853
- US-A- 4 984 466
- US-A1- 2008 190 493
- US-A1- 2010 018 319

## Beschreibung

Die Erfindung betrifft einen Drucksensor sowie ein Pumpenaggregat mit einem solchen Drucksensor.

Drucksensoren werden in verschiedenen Anlagen bzw. Maschinen und insbesondere in Pumpenaggregaten eingesetzt, um Mediendrücke zu erfassen. So ist es beispielsweise bei Pumpenaggregaten möglich, mithilfe eines Drucksensors den ausgangsseitigen Druck und gegebenenfalls eine Druckdifferenz zwischen Ein- und Ausgangsseite des Pumpenaggregates zu erfassen.

Da derartige Drucksensoren in Anlagen bzw. Maschinen zu integrieren sind, ist ein kompakter platzsparender Aufbau wünschenswert.

US 4,984,466 offenbart einen Halbleiterdrucksensor mit zwei Halbleiter-Druckmesselementen, welche an einem metallischen Träger befestigt sind, welcher gleichzeitig auch eine elektrische Anschlussfunktion übernimmt. Der metallische Träger und weitere elektrische Anschlusskontakte sind unter Verwendung eines Klebstoffes zwischen zwei Gehäuseteilen fixiert. Die Gehäuseteile bildet Kanäle zu beiden Seiten der Drucksensoren, wobei sich zwei Kanäle durch die metallische Tragplatte hindurch erstrecken. Eine entsprechende Ausgestaltung ist aus DE 41 07 347 A1 bekannt. Aus der US2008/190493 ist ein weiterer Drucksensor mit einer Leiterplatte bekannt, welcher eine Aussparung in der Leiterplatte aufweist, welche sich bis zum Rand der Leiterplatte erstreckt. Die US2008/190493 verfügt dabei über ein einziges Messelement.

Vor dem Hintergrund des beschriebenen Standes der Technik, ist es Aufgabe der Erfindung, einen Drucksensor mit einem kompakten Aufbau sowie ein Pumpenaggregat mit einem solchen kompakten Drucksensor bereitzustellen, in welche die druckführenden Kanäle des Drucksensors gegenüber einem an einer Leiterplatte angeordneten Messelement zuverlässiger abgedichtet werden können.

Diese Aufgabe wird gelöst durch einen Drucksensor mit den in Anspruch 1 angegebenen Merkmalen sowie durch ein Pumpenaggregat mit den in Anspruch 17 angegebenen Merkmalen. Bevorzugte Ausführungsformen ergeben sich aus den Unteransprüchen, der nachfolgenden Beschreibung sowie den beigefügten Figuren.

Der erfindungsgemäße Drucksensor weist eine Leiterplatte auf, an welcher zumindest ein Messelement, d. h. der eigentliche Druckaufnehmer, angeordnet ist. Auf der Leiterplatte sind die erforderlichen elektrischen Anschlüsse des Messelementes und gegebenenfalls weitere elektrische bzw. elektronische Bauteile, welche insbesondere zur Auswertung und/oder Weiterleitung eines Ausgangssignals des Messelementes dienen können, angeordnet. Ferner weist der Drucksensor zumindest einen ersten Fluidkanal auf, welcher mit dem Messelement verbunden ist und insbesondere an dem Messelement endet. Der Fluidkanal dient dazu, einen Fluiddruck zu dem Messelement hin zu übertragen, sodass das Messelement den auf den Fluidkanal wirkenden Druck erfassen kann. Der Fluidkanal kann eine Verbindung zu einem Anlagenteil herstellen, an welchem der Druck aufgenommen werden soll. An dem dem Messelement entgegengesetzten Ende endet der Fluidkanal somit vorzugsweise an einer Druckaufnahmeöffnung, durch welche das Medium, dessen Druck zu erfassen ist, in den Fluidkanal eindringen kann bzw. der Druck auf das Medium in den Fluidkanal einwirken kann.

Erfindungsgemäß ist nun vorgesehen, dass der erste Fluidkanal sich ausgehend von einer ersten Seite der Leiterplatte durch eine Ausnehmung in der Leiterplatte hindurch zu einer zweiten Seite der Leiterplatte erstreckt und an dieser zweiten Seite der Leiterplatte mit dem Messelement verbunden ist. Diese Ausgestaltung hat den Vorteil, dass das Messelement, welches den Druck in dem Fluidkanal erfassen soll, nicht zwingend an derjenigen Seite der Leiterplatte gelegen sein muss, von welcher ausgehend sich der Fluidkanal zu einer Druckaufnahmeöffnung hin erstreckt. Vielmehr kann der Fluidkanal sich so durch die Leiterplatte hindurch zu deren Rückseite erstrecken, an welcher dann das Messelement angeordnet ist. Dies kann einen sehr kompakten Aufbau des Drucksensors ermöglichen.

Der erste Fluidkanal erstreckt sich dabei bevorzugt in einer Richtung quer und insbesondere normal zu einer Oberfläche der Leiterplatte durch die Ausnehmung hindurch. So kann sich der Fluidkanal beispielsweise in einer Art Sensor bzw. Messfinger von der Leiterplatte weg zu einer Druckaufnahmeöffnung erstrecken, wobei dieser Messfinger in eine Ausnehmung im Gehäuse einer Anlage oder einer Maschine, in welcher der Druck zu bestimmen ist, eingesetzt werden kann. Dabei liegt dann eine Druckaufnahmeöffnung an einem Ende des Messfingers, während die Leiterplatte vorzugsweise am entgegengesetzten Ende liegt und sich dort quer zur Erstreckungsrichtung des ersten Fluidkanals ausdehnen kann, sodass ein Drucksensor mit möglichst kurzer axialer Baulänge geschaffen werden kann.

Gemäß einer weiteren bevorzugten Ausführungsform der Erfindung umgibt die Leiterplatte die Ausnehmung ringförmig. Dabei kann die Leiterplatte einen geschlossenen Ring um die Ausnehmung herum bilden. Es ist jedoch auch denkbar, dass die Leiterplatte sich nach Art eines offenen Ringes um die Ausnehmung herum erstreckt. Dabei erstreckt sich die Leiterplatte bevorzugt um mindestens 270° um die Ausnehmung herum. Durch die ringförmige Anordnung der Leiterplatte um die Ausnehmung herum kann der die Ausnehmung umgebende Bauraum auf der Leiterplatte für elektronische bzw. elektrische Bauteile ausgenutzt werden. Bevorzugt ist die Ausnehmung zentral in der Leiterplatte gelegen, welche gemäß einer bevorzugten Ausführungsform eine runde Außenkontur aufweist.

Gemäß einer weiteren bevorzugten Ausführungsform der Erfindung weist der erste Fluidkanal an der zweiten Seite der Leiterplatte ein Umlenkelement auf, in welchem sich die Erstreckungsrichtung des Fluidkanals ändert und vorzugsweise um 180° ändert. D. h., an der zweiten Seite wird der Fluidkanal so umgelenkt, dass er vorzugsweise von der zweiten Seite der Leiterplatte her an einem Messelement enden kann. So kann das Messelement mit Druck beaufschlagt werden, auch wenn seine Messfläche einer ersten Seite der Leiterplatte abgewandt ist, von welcher ausgehend sich der Fluidkanal zu der Leiterplatte hin und durch diese hindurch zu der zweiten Seite erstreckt. Vorzugsweise erfolgt die Umlenkung in dem Umlenkelement um 180°, d. h. U-förmig, wobei das Messelement seitlich, d. h. in Richtung der Oberfläche der Leiterplatte neben der Ausnehmung angeordnet ist.

So kann der erste Fluidkanal an der zweiten Seite der Leiterplatte ein Umlenkelement aufweisen, in welchem sich die Erstreckungsrichtung des Fluidkanals zweimal um 90° ändert, wobei es zwischen den beiden Umlenkungen vorzugsweise einen Kanalabschnitt gibt, welcher sich parallel zur Oberfläche der Leiterplatte erstreckt. Dadurch kann ein seitlicher Versatz des Messelementes zu der Ausnehmung, durch welche sich der Fluidkanal erstreckt, realisiert werden.

Gemäß einer weiteren möglichen Ausführungsform der Erfindung kann der erste Fluidkanal zumindest einen ersten Kanalabschnitt aufweisen, welcher an der ersten Seite der Leiterplatte gelegen ist, d. h. im Wesentlichen an der ersten Seite der Leiterplatte gelegen ist, und zumindest einen zweiten Kanalabschnitt aufweisen, welcher an der zweiten Seite der Leiterplatte, d. h. im Wesentlichen an der zweiten Seite der Leiterplatte gelegen ist. Wenn der erste Kanalabschnitt im Wesentlichen an der ersten Seite der Leiterplatte gelegen ist, so bedeutet dies, dass vorzugsweise der größte Teil des Kanalabschnittes an dieser Seite der Leiterplatte gelegen ist. Entsprechendes gilt für den zweiten Kanalabschnitt. Der erste und der zweite Kanalabschnitt sind weiter bevorzugt über eine gedichtete Schnittstelle miteinander verbunden, wobei diese gedichtete Schnittstelle vorzugsweise im Bereich der Ausnehmung in der Leiterplatte gelegen ist. Diese zweiteilige Ausgestaltung des Fluidkanals ermöglicht eine einfache Montage, da die Leiterplatte so zwischen zwei Bauteilen angeordnet werden kann, welche jeweils einen der Kanalabschnitte beherbergen und im Bereich der Ausnehmung dichtend miteinander in Eingriff treten.

Weiter bevorzugt ist ein an der zweiten Seite der Leiterplatte gelegener zweiter Kanalabschnitt des ersten Fluidkanals in einem Gehäusekörper ausgebildet, welcher Teil eines die Leiterplatte beherbergenden Elektronikgehäuses ist. So kann dieser Gehäusekörper gegebenenfalls mit weiteren Gehäuseteilen einen Aufnahmeraum umschließen, in welchem die Leiterplatte angeordnet ist. Dabei ist der Gehäusekörper vorzugsweise so ausgebildet, dass er sich parallel zu der Leiterplatte in einem Ausmaß erstreckt, dass die Leiterplatte an ihrer zweiten Seite vollständig von dem Gehäusekörper überdeckt wird. So kann der Gehäusekörper als Deckel eines Elektronikgehäuses fungieren. Es ist jedoch auch möglich, dass der Gehäusekörper im Inneren des Elektronikgehäuses angeordnet ist und beispielsweise von einem zusätzlichen Deckel überdeckt wird. In diesem Fall kann der Gehäusekörper beispielsweise auch lediglich dazu dienen, den Fluidkanal zu beherbergen.

Weiter bevorzugt ist zumindest derjenige Teil des Gehäusekörpers, in welchem der zweite Kanalabschnitt gelegen ist, einstückig ausgebildet. So kann der Kanalabschnitt besonders vorteilhaft direkt im Inneren eines massiven Gehäusekörpers ausgebildet sein. Dies ist beispielsweise möglich, indem der Gehäusekörper als Gussbauteil oder auch als in einem generativen Fertigungsverfahren (3D-Druck) generiertes Bauteil ausgebildet wird. Auf diese Weise lässt sich auf einfache Weise auch ein Kanalabschnitt mit komplexen Verlauf, beispielsweise den oben beschriebenen Umlenkungen, ohne abzudichtende Schnittstellen ausbilden.

Gemäß einer weiteren möglichen Ausgestaltung der Erfindung kann das Messelement ein Differenzdruckelement mit zwei einander abgewandten Messflächen sein. So kann das Messelement beispielsweise eine Membran sein, welche von beiden Seiten mit Druck beaufschlagt wird, wobei über die Auslenkung der Membran der Differenzdruck zwischen den beiden Seiten bestimmt wird. Die Auslenkung kann beispielsweise durch in oder auf der Membran angeordnete Dehnungsmesselemente oder piezoelektrische Elemente erfasst werden. Es ist jedoch auch möglich, zwei unabhängig voneinander agierende Messelemente zur Differenzdruckbestimmung einzusetzen. Vorzugsweise ist eine erste Messfläche zur ersten Seite der Leiterplatte und eine zweite Messfläche zur zweiten Seite der Leiterplatte gewandt. Durch die beschriebene Erstreckung des ersten Fluidkanals durch die Leiterplatte hindurch kann so ein zu erfassender Druck auf die zweite Messfläche an der zweiten Seite der Leiterplatte, d. h., der Rückseite der Leiterplatte, gebracht werden, während der andere Druck an der ersten Seite der Leiterplatte auf die dort gelegene erste Messfläche wirkt. So kann auf einfache Weise der Differenzdruck bestimmt werden und das Messelement kann sicher auf der Leiterplatte kontaktiert werden. Im Bereich des Messelementes weist die Leiterplatte vorzugsweise eine Durchbrechung auf, sodass sich auch dort ein Druckkanal durch die Leiterplatte hindurch erstrecken kann und ein an einer Seite der Leiterplatte angeordnetes Messelement von zwei Seiten mit Druck beaufschlagt werden kann.

Bevorzugt endet der erste Fluidkanal an der zweiten Messfläche des Messelementes, welche der zweiten Seite der Leiterplatte abgewandt ist. Dies kann durch die oben beschriebene Umlenkung in dem Fluidkanal an der zweiten Seite der Leiterplatte erreicht werden.

Vorzugsweise ist ferner ein zweiter Fluidkanal in dem Drucksensor vorhanden, welcher an der ersten Messfläche des Messelementes, d. h. der in Richtung der ersten Seite der Leiterplatte gewandten Messfläche endet. Dieser zweite Fluidkanal erstreckt sich vorzugsweise ausgehend von der ersten Seite der Leiterplatte weg zu einer Druckaufnahmeöffnung, welche vorzugsweise beabstandet von einer Druckaufnahmeöffnung des ersten Fluidkanals gelegen ist. Beide Druckaufnahmeöffnungen können beispielsweise beabstandet in einem Messfinger gelegen sein, wobei der Messfinger sich in bzw. durch zwei Messräume, in welchen die beiden Drücke aufzunehmen sind, erstreckt.

Der zweite Fluidkanal und zumindest ein erster Kanalabschnitt des ersten Fluidkanals sind somit bevorzugt in einem gemeinsamen, vorzugsweise einteilig ausgebildeten Sensorkörper angeordnet. Dies vereinfacht den Aufbau und ermöglicht einen sehr kompakten Aufbau des Drucksensors. Die Fluidkanäle können in dem Sensorkörper auf verschiedene Weise ausgebildet sein. So ist es möglich, einen oder beide Fluidkanäle bei der Fertigung des Sensorkörpers, beispielsweise in einem Gussverfahren oder in einem generativen Fertigungsverfahren auszubilden. Alternativ ist es möglich, einen oder beide Fluidkanäle oder lediglich Abschnitte der Fluidkanäle nachträglich durch Bearbeitung des Sensorkörpers in diesen einzubringen, beispielsweise durch spanende Bearbeitung oder auch thermische Bearbeitung, z.B. mittels Laserstrahl. Die Ausbildung der Fluidkanäle bzw. der Kanalabschnitte der Fluidkanäle in einem einteiligen und insbesondere einstückigen Sensorkörper hat den Vorteil, dass möglichst wenige abzudichtende Schnittstellen entstehen.

Die Leiterplatte ist vorzugsweise zwischen einem Gehäusekörper des Elektronikgehäuses und dem Sensorkörper gelegen. Der Gehäusekörper des Elektronikgehäuses kann dabei, wie oben beschrieben, ein Gehäuseteil des Elektronikgehäuses sein, welches dieses nach außen abschließt oder aber ein Gehäusekörper, welcher im Inneren des Elektronikgehäuses gelegen ist und dort einen oder mehrere Fluidkanäle bzw. Kanalabschnitte von Fluidkanälen beherbergt. Der Gehäusekörper und der Sensorkörper sind vorzugsweise so geformt, dass, wenn sie zusammengesetzt sind, einen Aufnahmeraum umschließen, in dem die Leiterplatte angeordnet ist. Dabei wird die Leiterplatte vorzugsweise zwischen dem Gehäusekörper und dem Sensorkörper fixiert. Weiter bevorzugt treten Messelementaufnahmen, welche in dem Sensorkörper und/oder dem Gehäusekörper ausgebildet sind und an welchen die beschriebenen Fluidkanäle enden, bei der Montage in dichte Anlage mit den Messelementen bzw. mit die Messelemente umgebenden Dichtflächen. So werden durch die Fixierung der Leiterplatte zwischen dem Gehäusekörper und dem Sensorkörper vorzugsweise auch die erforderlichen Dichtungen in Anlage gebracht.

Gemäß einer weiteren möglichen Ausführungsform der Erfindung ist in einem die Leiterplatte beherbergenden Elektronikgehäuse, beispielsweise einem Gehäusekörper des Elektronikgehäuses, ein dritter Fluidkanal ausgebildet, welcher ein an der Leiterplatte angeordnetes Messelement mit der Atmosphäre außerhalb des Elektronikgehäuses verbindet. Dies ermöglicht es, ein Drucksignal der anderen Messelemente mit dem Umgebungsdruck zu kompensieren.

Dabei sind vorzugsweise der zweite Kanalabschnitt des ersten Fluidkanals und der dritte Fluidkanal in demselben Gehäusekörper des Elektronikgehäuses und vorzugsweise in einem einstückig ausgebildeten Teil des Gehäusekörpers ausgebildet. Dies erleichtert die Montage, da nur wenige abzudichtende Schnittstellen entstehen. Die Fluidkanäle bzw. Abschnitte der beschriebenen Fluidkanäle können in dem Gehäusekörper in den oben beschriebenen Weisen, beispielsweise beim Gießen des Gehäusekörpers, generativ (3D-Druck) oder auch durch nachträgliche Bearbeitung eingebracht werden.

Gemäß der Erfindung sind an der Leiterplatte zwei Messelemente für die Druckmessung angeordnet, zwischen denen die Leiterplatte eine, sich bis zum Rand der Leiterplatte erstreckende Aussparung aufweist. Diese Aussparung ermöglicht eine Kraftentkopplung zwischen den beiden Druckmesselementen. So können Spannungen beim Fixieren der Messelemente an zugehörigen Messelementaufnahmen bei der Montage verhindert werden, welche möglicherweise zu Undichtigkeiten oder Verfälschungen der Messergebnisse aufgrund einer Verformung der Messelemente führen könnten. Die Aussparung kann vorzugsweise als ein in der Leiterplatte ausgebildeter Schlitz ausgebildet sein. Ein solcher Schlitz kann sich ausgehend vom Rand der Leiterplatte zu deren Zentrum hin erstrecken. Wenn die Leiterplatte rund ausgebildet ist, kann sich der Schlitz besonders bevorzugt in radialer Richtung erstrecken. Durch die Aussparung ist es dennoch möglich, mehrere Messelemente auf ein- und derselben Leiterplatte anzuordnen, wodurch die Montage vereinfacht wird, da alle erforderlichen elektrischen Verbindungen für beide Messelemente auf einer Leiterplatte ausgebildet werden können. Vorzugsweise ist das eine Messelement ein Differenzdruckmesselement, wie es oben beschrieben wurde und das zweite Messelement ein Messelement, welches den Umgebungsdruck, beispielsweise über den zuvor beschriebenen dritten Fluidkanal erfasst.

Besonders bevorzugt ist die Aussparung zwischen den Messelementen mit der Ausnehmung der Leiterplatte, durch welche sich der Fluidkanal erstreckt, verbunden. Wie oben beschrieben, kann die Leiterplatte die Aussparung bevorzugt ringförmig umgeben, wobei die Aussparung insbesondere im Zentrum der Leiterplatte angeordnet werden kann. Die Aussparung zur Kraftentkopplung kann sich dabei ausgehend von der Ausnehmung, durch welche der Fluidkanal verläuft, in der Leiterplatte erstrecken, insbesondere bis zu deren Rand erstrecken. Dies ermöglicht eine gute Verformbarkeit der Leiterplatte, welche eine Kraftentkopplung ermöglicht. Wenn die Aussparung mit der Ausnehmung verbunden ist, erstreckt sich die Leiterplatte dennoch vorzugsweise in einem Winkelbereich von mehr als 270°, weiter bevorzugt von mehr als 320° ringförmig um die Ausnehmung herum.

Gegenstand der Erfindung ist neben dem vorangehend beschriebenen Drucksensor auch ein Pumpenaggregat, insbesondere ein Kreiselpumpenaggregat, in welchem ein Drucksensor, wie er vorangehend beschrieben wurde, zum Einsatz kommt. Dabei ist der Drucksensor in dem Pumpenaggregat so angeordnet, dass er einen Druck im Inneren des Pumpenaggregates, insbesondere an der Druckseite des Pumpenaggregates erfassen kann. Besonders bevorzugt ist der Drucksensor so ausgestaltet und angeordnet, dass er einen Differenzdruck zwischen Saug- und Druckseite des Pumpenaggregates erfassen kann. Es sind Kreiselpumpenaggregate bekannt, bei welchen ein druckseitiger Kanal seitlich an den Pumpenstufen zu dem axialen Ende, an welchem die Saugseite gelegen ist, zurückgeführt ist, um den saugseitigen und den druckseitigen Anschluss am selben Axialende, vorzugsweise in-line anordnen zu können. Bei einer solchen Anordnung ist es relativ einfach, einen Differenzdrucksensor einzubringen, da ein Messfinger des Differenzdrucksensors durch eine Öffnung bzw. Bohrung im Pumpengehäuse so eingeschoben werden kann, dass er den äußeren druckseitigen Kanal durchdringt und bis in den innen gelegenen saugseitigen Kanal hineinragt, wobei in einer Trennwand zwischen dem druckseitigen und dem saugseitigen Kanal zweckmäßigerweise eine Abdichtung erfolgt. In dem Messfinger können die Druckaufnahmeöffnungen, welche mit den oben beschriebenen Fluidkanälen verbunden sind, so gelegen sein, dass eine Druckaufnahmeöffnung in dem Druckkanal und die andere Druckaufnahmeöffnung in dem Saugkanal des Pumpenaggregates gelegen ist. Der beschriebene kompakte Aufbau des Drucksensors hat dabei den Vorteil, dass das Elektronikgehäuse mit der Leiterplatte wenig nach außen auskragt, sodass die Außenabmessungen des Pumpenaggregates durch den Drucksensor nur wenig vergrößert werden.

Nachfolgend wird die Erfindung beispielhaft anhand der beigefügten Figuren beschrieben. In diesen zeigt:
- Fig. 1: eine Schnittansicht eines mehrstufigen Kreiselpumpenaggregats gemäß der Erfindung,
- Fig. 2: eine Schnittansicht eines Basis- oder Fußgehäuses eines mehrstufigen Kreiselpumpenaggregates mit einem darin angeordneten Drucksensor,
- Fig. 3: eine perspektivische Explosionsansicht eines erfindungsgemäßen Drucksensors,
- Fig. 4: eine perspektivische Explosionsansicht des Drucksensors gemäß Fig. 3 mit Sicht auf das Elektronikgehäuse,
- Fig. 5A: eine teilweise transparente Ansicht eines Gehäusekörpers des Drucksensors gemäß Fig. 3 und 4,
- Fig. 5B: eine Schnittansicht des Gehäusekörpers gemäß Fig. 5A,
- Fig. 6: eine Schnittansicht des Drucksensors gemäß Fig. 3 und 4,
- Fig. 7: ein erstes alternatives Ausführungsbeispiel für Fluidkanäle in einem Drucksensor,
- Fig. 8: ein zweites alternatives Ausführungsbeispiel für eine Anordnung von Fluidkanälen in einem Drucksensor,
- Fig. 9: ein drittes alternatives Ausführungsbeispiel für die Anordnung von Fluidkanälen in einem Drucksensor,
- Fig. 10: ein viertes alternatives Ausführungsbeispiel für die Anordnung von Fluidkanälen in einem Drucksensor,
- Fig. 11: eine Schnittansicht eines weiteren Ausführungsbeispiels eines Fluidkanals in einem erfindungsgemäßen Drucksensor und
- Fig. 12: eine schematische Schnittansicht eines weiteren Ausführungsbeispiels eines Fluidkanals in einem erfindungsgemäßen Drucksensor.

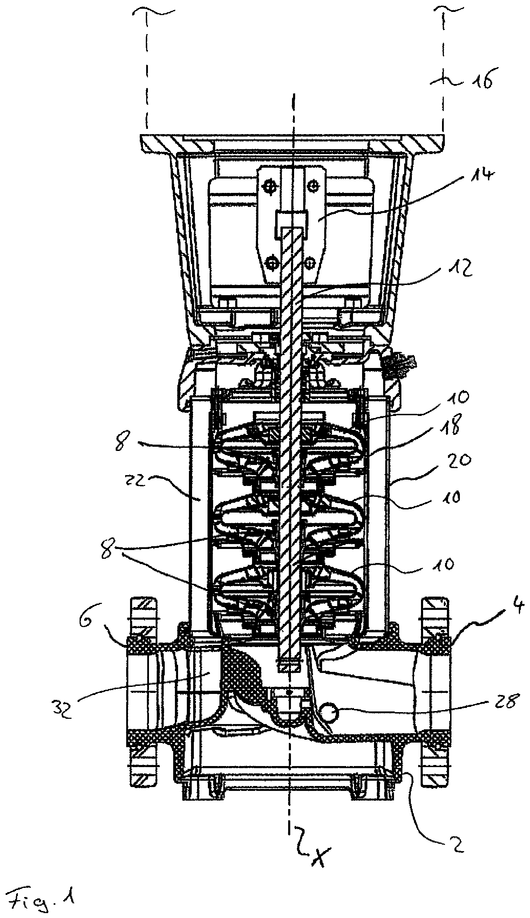

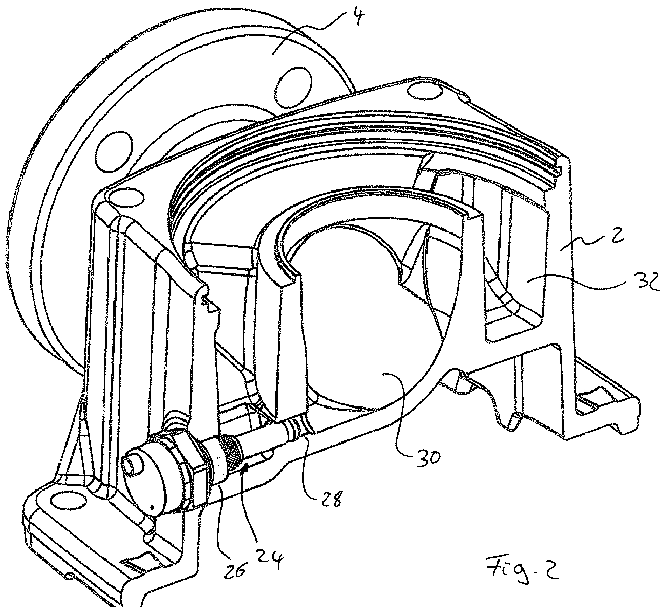

Fig. 1 zeigt in einer Schnittansicht ein mehrstufiges Kreiselpumpenaggregat als Beispiel für ein Pumpenaggregat gemäß der Erfindung, in welchem ein erfindungsgemäßer Drucksensor zum Einsatz kommt. Das gezeigte Pumpenaggregat weist ein Fuß- bzw. Basisgehäuse 2 auf, an welchem ein Einlassstutzen 4 und ein Auslassstutzen 6 ausgebildet sind. An das Basisgehäuse 2 angesetzt sind in diesem Ausführungsbeispiel drei Pumpstufen, welche jeweils aus einem Laufrad 8 und zwischenliegenden Leitapparaten 10 gebildet werden. Die Laufräder 8 sind auf einer gemeinsamen Welle 12 angeordnet, welche über eine Kupplung 14 mit einem hier nur schematisch gezeigten Antriebsmotor 16 verbunden ist. Die einzelnen Pumpenstufen sind in einem inneren rohrförmigen Gehäuse 18 gelegen, welches beabstandet von einem äußeren Gehäuse 20, welches ebenfalls rohrförmig ausgestaltet ist, umgeben ist. So wird zwischen den Gehäusen 18 und 20 ein ringförmiger Kanal 22 gebildet, welcher als Druckkanal dient und die Ausgangseite der Pumpenstufen mit dem Auslass- bzw. Druckstutzen 6 in dem Basisgehäuse 2 verbindet. Wie in Fig. 2 gezeigt, ist in dem Basisgehäuse 2 ein Drucksensor 24 angeordnet. Der Drucksensor 24 ist durch eine Öffnung 26 in der äußeren Gehäusewandung des Basisgehäuses 2 eingesetzt. Dieser Öffnung 26 gegenüberliegend ragt der Drucksensor 24 in eine Öffnung 28 in einer Wandung des im Inneren des Basisgehäuses 2 gebildeten Saugkanals 30 hinein. So erstreckt sich der Drucksensor 24 durch einen Ringraum 32 hindurch. Der Ringraum 32 schließt sich in dem Basisgehäuse 2 an den ringförmigen Kanal 22 an und stellt die Verbindung zu dem Druckstutzen 6 her. Durch die Anordnung des Drucksensors 24 in dieser Weise kann der Drucksensor 24 sowohl den druckseitigen Druck im Ringraum 32 als auch den saugseitigen Druck im Saugkanal 30 und damit den Differenzdruck zwischen Ein- und Ausgangsseite des Pumpenaggregates erfassen.

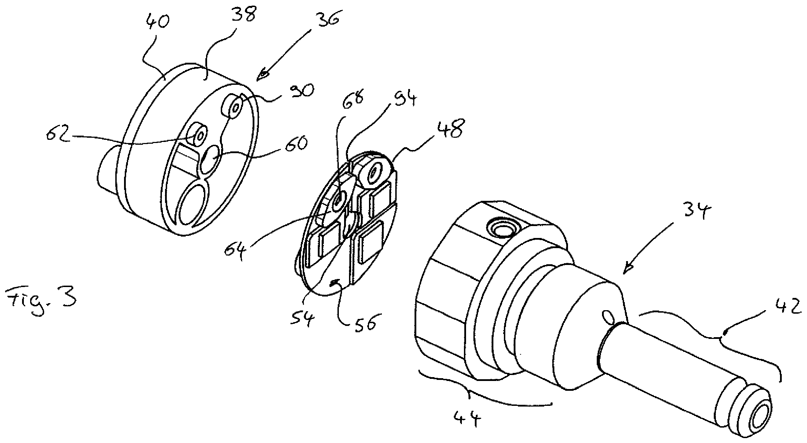

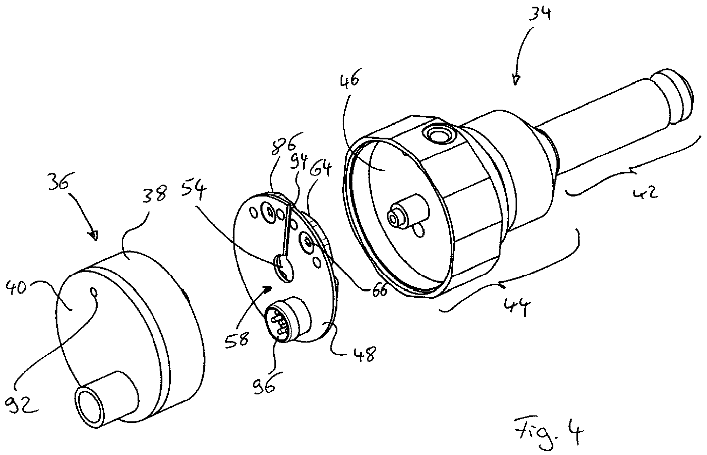

Der Aufbau des Drucksensors wird näher anhand der Fig. 3 bis 5 beschrieben. Der Drucksensor 24 besteht aus einem Sensorkörper 34 und einem Elektronikgehäuse 36. Das Elektronikgehäuse 36 weist einen Gehäusekörper 38 und einen diesen verschließenden Deckel 40 auf. Der Sensorkörper 34, und das Elektronikgehäuse 36 bilden gemeinsam ein Sensorgehäuse, welches alle wesentlichen Komponenten des Drucksensors enthält.

Der Sensorkörper 34 ist aus zwei Abschnitten 42 und 44 gebildet. Der erste Abschnitt 42 des Sensorkörpers bildet einen Sensorfinger, welcher sich, wie in Fig. 2 gezeigt, durch den Ringraum 32 in die Öffnung 28 hinein erstreckt. Der sich anschließende zweite Abschnitt 44 des Sensorkörpers grenzt an das Elektronikgehäuse 36 an. Der zweite Abschnitt 44 umschließt gemeinsam mit dem Gehäusekörper 38 einen Aufnahmeraum 46, in welchem eine Leiterplatte 48 mit der eigentlichen Messelektronik des Drucksensors angeordnet ist.

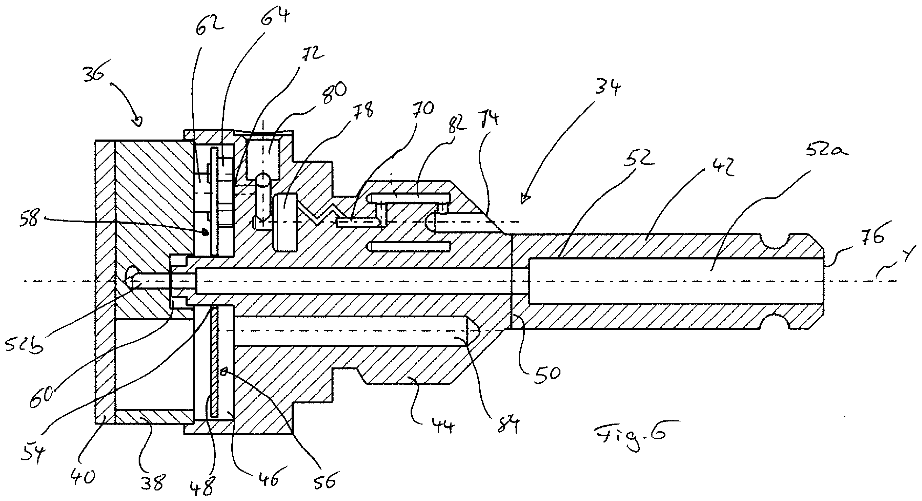

Der erste Abschnitt des Sensorkörpers 42 und der zweite Abschnitt des Sensorkörpers 44 sind in einer Verbindungsebene 50, welche in Fig. 6 dargestellt ist, miteinander verbunden. Dabei ist bei dem hier gezeigten Drucksensor der erste Abschnitt 42 im Herstellungsprozess zunächst als vorgefertigtes Bauteil bereitgestellt, beispielsweise als spanend aus einem Rundstahl gefertigtes Bauteil. Der zweite Abschnitt 44 hingegen ist in einem generativen bzw. additiven Fertigungsverfahren, das heißt im sogenannten 3D-Druck, an das vorgefertigte Bauteil, welches den ersten Abschnitt 42 bildet, angeformt. Das heißt, der zweite Abschnitt 44 ist additiv direkt auf dem ersten Abschnitt 42, welcher vorgefertigt ist, generiert worden. Dabei kommt es an der Verbindungsebene 50 zu einer Verschweißung beider Bauteile, sodass diese im Ergebnis einteilig ausgebildet sind. Im gezeigten Beispiel sind beide Teile aus demselben Material, vorzugsweise rostfreiem Edelstahl, gefertigt.

Der gesamte Sensorkörper 34 ist in seiner Längsrichtung Y von einem ersten Fluidkanal 52 durchzogen. Dabei weist der erste Fluidkanal 52 einen ersten Kanalabschnitt 52a und einen zweiten Kanalabschnitt 52b auf. Der erste Kanalabschnitt 52a erstreckt sich in dem Sensorkörper 34. Eine Verlängerung dieses Kanalabschnittes, welcher ebenfalls Teil des ersten Fluidkanals 52 ist, erstreckt sich in dem Gehäusekörper 38 als zweiter Kanalabschnitt 52b. In dem ersten Abschnitt 42 des Sensorkörpers 34 kann der erste Fluidkanal 52 beispielsweise im Bohrverfahren ausgebildet werden. In dem zweiten Abschnitt des Sensorkörpers 44 wird der erste Fluidkanal 52 direkt in der generativ gefertigten Struktur ausgebildet.

Die Leiterplatte 48 weist in ihrem Zentrum eine Ausnehmung 54 in Form eines zentralen Loches auf. Dieses dient dazu, dass sich der erste Fluidkanal 52 durch die Leiterplatte 48 hindurch erstrecken kann. Dabei ist der erste Abschnitt 52a des Fluidkanals 52 im Wesentlichen, das heißt zu seinem größten Teil, an einer ersten distalen Seite 56 der Leiterplatte 48 gelegen. Die erste Seite 56 ist zu dem freien bzw. distalen Ende des Sensorkörpers 34 hin gewandt, während die entgegengesetzte zweite Seite 58 der Leiterplatte dem Gehäusekörper 38 zugewandt ist. Zwischen dem Sensorkörper 34 und dem Gehäusekörper 38 ist eine gedichtete Schnittstelle 60 ausgebildet, an welcher der erste Kanalabschnitt 52a mit dem zweiten Kanalabschnitt 52b verbunden ist.

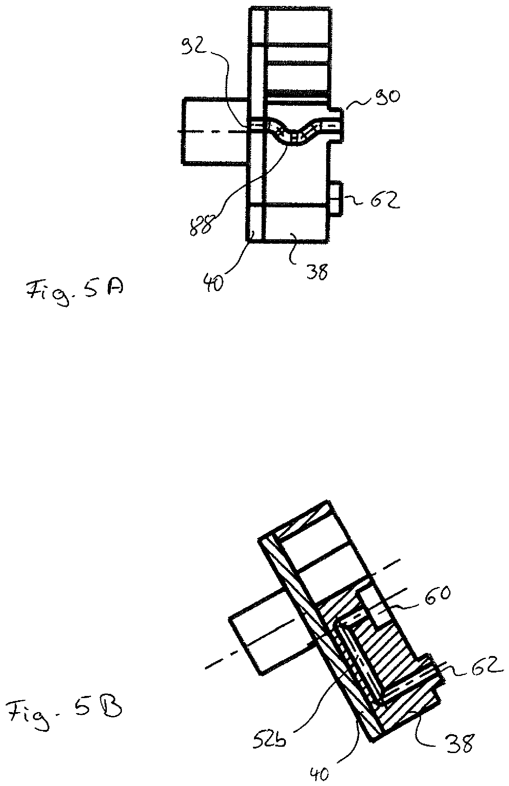

In dem Gehäusekörper 38 erstreckt sich der zweite Kanalabschnitt 52b, wie in Fig. 5B im Schnitt gezeigt ist, ausgehend von der Schnittstelle 60 zweimal um 90° gewinkelt in einem u-förmigen Verlauf zu einer Messelementaufnahme 62. Die Messelementaufnahme 62 ist radial versetzt zu der Schnittstelle 60, welche zentral angeordnet ist, gelegen. Der Gehäusekörper 38 mit dem Kanalabschnitt 52b ist vorzugsweise ebenfalls in einem generativen bzw. additiven Fertigungsverfahren, insbesondere aus Metall, wie beispielsweise rostfreiem Edelstahl, gefertigt.

Die Messelementaufnahme 62 kommt an einem ersten Messelement 64 zur Anlage. Das Messelement 64 ist an der Leiterplatte 48 angeordnet, wobei die Leiterplatte 48 eine Öffnung aufweist, durch welche die Messelementaufnahme 62 an dem Messelement 64, welches an der ersten Seite 56 der Leiterplatte angeordnet ist, zur Anlage kommen kann. Der Kanalabschnitt 52b des Fluidkanals 52 endet so an einer zweiten Messfläche 66 des Messelementes 64. Das Messelement 64 ist ein Differenzdruckmesselement. An der ersten Messfläche 68, welche an der ersten Seite 56 der Leiterplatte 48 gelegen ist, endet ein zweiter Fluidkanal 70, welcher ebenfalls in dem Sensorkörper 34 ausgebildet ist. Der zweite Fluidkanal 70 verbindet eine Messelementaufnahme 72, welche der ersten Messfläche 68 des Messelementes 64 gegenüberliegt mit einer Druckaufnahmeöffnung 74. Die Druckaufnahmeöffnung 74 ist beabstandet vom distalen Ende des Sensorkörpers 34 im Bereich des zweiten Abschnittes 44 gelegen. So ist die Druckaufnahmeöffnung 74 in axialer Richtung Y von der am distalen Ende gelegenen Druckaufnahmeöffnung 76, an welcher der erste Fluidkanal 52 mündet, beabstandet. So kann der Drucksensor 24, wenn er, wie in Fig. 2 gezeigt, in das Basisgehäuse 2 eingesetzt ist, am distalen Ende über die Druckaufnahmeöffnung 76 den Druck im Saugkanal 30 erfassen. Gleichzeitig ist die Druckaufnahmeöffnung 74 zu dem Ringraum 32 hin geöffnet, um den Ausgangsdruck des Pumpenaggregates zu erfassen.

Der zweite Fluidkanal 70 in dem zweiten Abschnitt 44 des Sensorkörpers 34 weist einen komplexen mehrfach gewinkelten, im Ergebnis im Wesentlichen mäanderförmigen Verlauf auf. Durch den streckenweise gewinkelten bzw. zick-zack-förmigen Verlauf werden Reflektionsflächen geschaffen, welche Druckwellen reflektieren. So kann eine Druckwelle, welche in die Druckaufnahmeöffnung 74 eintritt, nicht ungehindert die Messfläche 68 an dem Messelement 64 erreichen. Es findet vielmehr eine Dämpfung statt, welche das Messelement 64 vor Beschädigungen schützt. Im Verlauf des Fluidkanals 70 ist darüber hinaus eine Querschnittserweiterung in Form eines zylindrischen Expansionsraumes 78 vorgesehen, welcher ebenfalls zur Dämpfung zur Verringerung von Kavitation bei auftretenden Unterdrücken dient. Im hier gezeigten Beispiel zweigt von dem zweiten Fluidkanal 70 darüber hinaus noch ein Spülanschluss 80 ab, welcher insbesondere für die Entlüftung vorgesehen ist und ggf. im Betrieb verschlossen sein kann. Neben dem Expansionsraum 78 weist der zweite Fluidkanal 70 noch einen ringförmigen Expansionsraum 82 auf, welcher ebenfalls zur Dämpfung von auftretenden Druckschwankungen und zur Verminderung von Kavitation dienen kann. Die Kontur des zweiten Fluidkanals 70, welcher in diesem Ausführungsbeispiel der Druckseite des Pumpenaggregates zugeordnet ist, kann in seinem Verlauf und seiner Kontur durch das gewählte generative Fertigungsverfahren für den zweiten Abschnitt 44 sehr flexibel angepasst werden, da sich komplizierte Geometrien ohne Weiteres ausbilden lassen. Auch der erste Fluidkanal 52 könnte in dieser Weise mit Richtungsänderungen und/oder Querschnittsänderungen versehen sein.

Als generatives Fertigungsverfahren kann beispielsweise das selektive Lasersintern oder ein ähnliches Verfahren zur Anwendung kommen. Zusätzlich zu den genannten Fluidkanälen ist in dem zweiten Abschnitt 44 des Sensorkörpers 34 darüber hinaus in diesem Beispiel ein Freiraum 84 ausgebildet, um Material zu sparen und die Fertigungszeit zu verkürzen. Die Fertigungszeit wird ebenfalls durch den beschriebenen Hybridaufbau mit dem vorgefertigten ersten Abschnitt 42 verkürzt, da dieser konventionell vorgefertigt werden kann. Alternativ ist es jedoch denkbar, auch den ersten Abschnitt 42 in einem generativen Fertigungsverfahren vorzufertigen und beispielsweise vor dem Aufbringen des zweiten Abschnittes 44 nachzubearbeiten, beispielsweise außenumfänglich zu schleifen oder zu polieren, um den Strömungswiderstand in dem Ringraum 32 zu minimieren.

Wenn der Gehäusekörper 38 an den Sensorkörper 34 angesetzt ist, liegen die Messelementaufnahmen 62 und 72 einander so gegenüber, dass das Messelement 64 zwischen ihnen dichtend eingeklemmt wird und so von beiden Seiten zur Differenzdruckmessung mit Druck beaufschlagt werden kann. An der Leiterplatte 48 ist darüber hinaus ein zweites Messelement 86 angeordnet, welches dafür vorgesehen ist, den Umgebungsdruck zu erfassen. Dazu ist in dem Gehäusekörper 38, wie in Fig. 5A gezeigt, ein dritter Fluidkanal 88 ausgebildet. Der Fluidkanal 88 erstreckt sich ausgehend von einer Messelementaufnahme 90 zu einer Öffnung 92 in den Deckel 40. Der dritte Fluidkanal 88 verläuft dabei bogenförmig, so dass es nicht möglich ist, einen geraden Gegenstand durch die Öffnung 92 und durch den gesamten dritten Fluidkanal 88 hindurch bis zu dem Messelementaufnahme 90 einzuführen. Dadurch wird das Messelement 86 vor Beschädigungen geschützt. Der dritte Fluidkanal 88 bringt den Umgebungsdruck an das Messelement 86. Dazu liegt die Messelementaufnahme 90, welche eine Öffnung in der Leiterplatte 48 durchgreift, an einer Messfläche des Messelementes 86 an. Das Messelement 86 ist ebenfalls an der ersten Seite der Leiterplatte 48 angeordnet. Um eine Kraftentkopplung zwischen den Messelementen 64 und 86 zu erreichen, weist die Leiterplatte 48 eine Aussparung in Form eines sich radial erstreckenden Schlitzes 94 auf. Dieser erstreckt sich vom Außenumfang in radialer Richtung bis zu der Ausnehmung 54. Der Schlitz 94 ermöglicht eine gewisse Verformbarkeit der Leiterplatte 48. Neben den beschriebenen Messelementen 64 und 86 trägt die Leiterplatte 48 weitere elektronische Bauteile zur Messwerterfassung und Auswertung und stellt die Verbindung zu einem Anschlussstecker 96 des Drucksensors her.

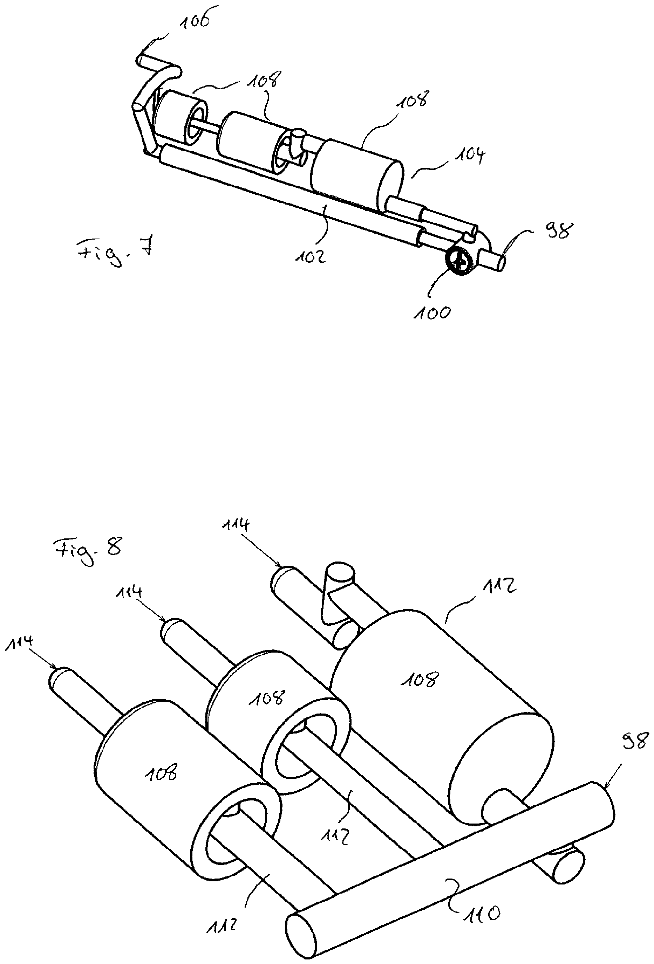

Wie beschrieben, ermöglicht die generative Fertigung der Struktur, in welcher die Fluidkanäle ausgebildet sind, unterschiedliche Verläufe bzw. Geometrien der Fluidkanäle, um verschiedene Dämpfungseigenschaften zu erzielen. Anhand der Fig. 7 bis 11 werden weitere mögliche Geometrien für derartige Fluidkanäle in einen Drucksensor beschrieben.

Bei dem Ausführungsbeispiel gemäß Fig. 7 gibt es eine Druckaufnahmeöffnung 98 von der ausgehend ein Fluidkanal zu einer Ventileinrichtung 100 verläuft, über welche die Verbindung wahlweise zu einem Fluidkanal 102 oder Fluidkanal 104 umschaltbar ist. Die Ventileinrichtung 100 kann ebenfalls in der generativ gefertigten Struktur mit ausgebildet werden, wobei vorzugsweise auch das bewegliche Ventilelement mit integral ausgebildet wird. Der Fluidkanal 102 verläuft relativ direkt mit drei Abwinklungen zu einer ersten Messelementaufnahme 106. Der zweite Fluidkanal 104 hat eine komplexere Geometrie mit drei Expansionsräumen 108 und mehreren Abwicklungen. Der Fluidkanal 104 mündet vor der Messelementaufnahme 106 wieder in den anderen Fluidkanal 102. Durch Umschalten der Ventileinrichtung 100 kann wahlweise der Fluidkanal 102 oder der Fluidkanal 104 zur Verbindung mit der Messelementaufnahme 106 genutzt werden. So kann der Sensor an verschiedene Anwendungsfälle angepasst werden.

In Fig. 8 ist eine weitere mögliche Ausgestaltung gezeigt. Dort ist ebenfalls eine Druckaufnahmeöffnung 98 vorgesehen, an welche sich ein gemeinsamer Kanalabschnitt 110 anschließt. Von diesem gemeinsamen Kanalabschnitt 110 zweigen drei Kanalabschnitte 112 zu drei Messelementaufnahmen 114 ab. Die drei Kanalabschnitte 112 weisen unterschiedliche Geometrien mit unterschiedlichen Abwinklungen und unterschiedlich geformten Expansionsräumen auf. Bei diesem Ausführungsbeispiel sind alle drei Messelementaufnahmen 114 über die drei Kanalabschnitte 112 ständig in Verbindung mit der Druckaufnahmeöffnung 98. Ein solcher Sensor kann dadurch an verschiedene Einsatzzwecke angepasst werden, dass wahlweise eines von drei Messelementen, welche an den Messelementaufnahmen 114 anliegen, aktiviert wird und die anderen zwei beispielsweise nicht genutzt werden. So kann eine rein elektronische Anpassung an verschiedene Einsatzmöglichkeiten erreicht werden.

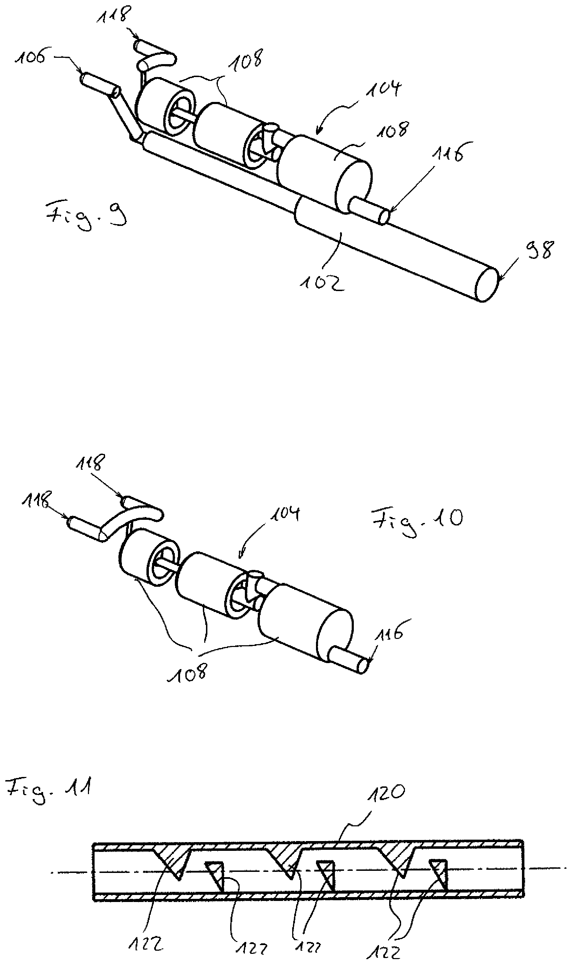

Fig. 9 zeigt ein Ausführungsbeispiel ähnlich dem Ausführungsbeispiel in Fig. 7 mit dem Unterschied, dass kein Ventilelement 100 vorgesehen ist, sondern der Fluidkanal 104, an einer zweiten Druckaufnahmeöffnung 116 endet. Ferner endet der Fluidkanal 104 an einer eigenen Messelementaufnahme 118. So können auch hier zwei Messelemente an den Messelementaufnahmen 106 und 118 angeordnet werden und es kann eine Anpassung des Sensors durch Aktivierung des jeweiligen Messelementes erreicht werden, sodass wahlweise für die Druckübertragung der Fluidkanal 102 oder der Fluidkanal 104 genutzt wird. Auch könnte ein solcher Sensor zur Differenzdruckmessung genutzt werden, indem die Druckaufnahmeöffnungen 98 und 116 an verschiedenen Stellen eines Aggregates platziert werden, wie es oben anhand von Fig. 2 beschrieben wurde. Für eine solche Differenzdruckmessung würden dann die Messelementaufnahmen 106 und 118 beide genutzt bzw. ähnlich dem ersten Ausführungsbeispiel mit zwei Seiten eines Differenzdruck-Messelementes in Kontakt gebracht.

Ein viertes mögliches Ausführungsbeispiel für einen Fluidkanal ist in Fig. 10 gezeigt. Dort entspricht der Fluidkanal im Wesentlichen dem Fluidkanal 104 gemäß Fig. 9. An dem der Druckaufnahmeöffnung 116 angewandten Ende verzweigt sich hier der Fluidkanal 104 zu zwei Messelementaufnahmen 118, sodass der Druck in dem Fluidkanal 104 gleichzeitig auf zwei Messelemente wirken kann, von denen beispielsweise ein Messelement zur Differenzdruckmessung und das andere für eine Absolutdruckmessung verwendet wird.

Allen vier Ausführungsbeispielen gemäß Fig. 7 bis 10 ist gemeinsam, dass neben unterschiedlich geformten Richtungsänderungen verschieden geformte Expansionsräume 108 zur Anwendung kommen können, wobei diese beispielsweise ringörmig wie der Expansionsraum 82 in Fig. 6 oder zylindrisch wie der Expansionsraum 78 in Fig. 6 ausgebildet sein können.

Fig. 11 zeigt eine weitere Geometrie eines Fluidkanals 120, welcher durch ein generatives Fertigungsverfahren ausgebildet werden kann. Dieser Fluidkanal 120 weist in seinem Inneren Vorsprünge 122 auf, welchen einen mäanderförmigen Verlauf des freien Durchganges des Strömungskanals 120 bewirken. Auch durch solch einen Kanalverlauf kann eine Dämpfung von Druckwellen bzw. Druckimpulsen erreicht werden.

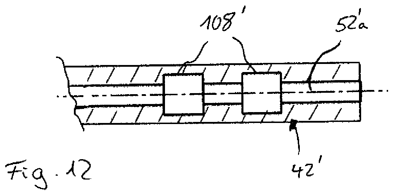

Fig. 12 zeigt ein weiteres Ausführungsbeispiel eines Fluidkanals, wie er in dem vorangehend beschriebenen Drucksensor zum Einsatz kommen kann. So zeigt Fig. 12 eine Variante der Ausgestaltung des ersten Fluidkanals 52 in dem Sensorkörper 34. Fig. 12 zeigt den ersten Abschnitt 42' eines Drucksensors, wie er in Fig. 6 im Schnitt dargestellt ist. In diesem Ausführungsbeispiel weist im Unterschied zu der Ausführungsform in Fig. 6 der Kanalabschnitt 52'a des ersten Fluidkanals 52 zwei Expansionsräume 108' auf. Diese bilden jeweils ein zusätzliches Fluidvolumen, welches vorteilhaft ist, um bei auftretenden Unterdrücken Kavitation im Bereich des Messelementes 64 zu verhindern. Es ist zu verstehen, dass derartige Kanaleigenschaften, welche zur Verhinderung von Kavitation dienen, im Falle des ersten Fluidkanals 52 auch in dem zweiten Kanalabschnitt 52b ausgebildet sein könnten. Im Übrigen ist zu verstehen, dass alle beschriebenen Fluidkanäle in ihrer geometrischen Gestaltung in beliebiger Kombination der vorangehend beschriebenen Gestaltungsmöglichkeiten gestaltet sein können, um angepasst an verschiedene Einsatzzwecke Druckimpulse bzw. Wasserschlag und/oder das Auftreten von Kavitation zu verringern.

### Bezugszeichenliste

- 2: Basisgehäuse
- 4: Einlassstutzen
- 6: Auslassstutzen
- 8: Laufräder
- 10: Leiterapparat
- 12: Welle
- 14: Kupplung
- 16: Antriebsmotor
- 18: inneres Gehäuse
- 20: äußeres Gehäuse
- 22: Kanal
- 24: Drucksensor
- 26: Öffnung
- 28: Öffnung
- 30: Saugkanal
- 32: Ringraum
- 34: Sensorkörper
- 36: Elektronikgehäuse
- 38: Gehäusekörper
- 40: Deckel
- 42, 42': erster Abschnitt des Sensorkörpers
- 44: zweiter Abschnitt des Sensorkörpers
- 46: Aufnahmeraum
- 48: Leiterplatte
- 50: Verbindungsebene
- 52: erster Fluidkanal
- 52a, 52'a: erster Kanalabschnitt
- 52b: zweiter Kanalabschnitt
- 54: Ausnehmung
- 56: erste Seite der Leiterplatte
- 58: zweite Seite der Leiterplatte
- 60: Schnittstelle
- 62: Messelementaufnahme
- 64: Messelement
- 66: zweite Messfläche
- 68: erste Messfläche
- 70: zweiter Fluidkanal
- 72: Messelementaufnahme
- 74, 76: Druckaufnahmeöffnung
- 78: Expansionsraum
- 80: Spülanschluss
- 82: Expansionsraum
- 84: Freiraum
- 86: Messelement
- 88: dritter Fluidkanal
- 90: Messelementaufnahme
- 92: Öffnung
- 94: Schlitz
- 96: Anschlussstecker
- 98: Druckaufnahmeöffnung
- 100: Ventileinrichtung
- 102, 104: Fluidkanäle
- 106: Messelementaufnahme
- 108, 108': Expansionsräume
- 110, 112: Kanalabschnitte
- 114: Messelementaufnahme
- 116: Druckaufnahmeöffnung
- 118: Messelementaufnahme
- 120: Fluidkanal
- 122: Vorsprünge
- Y: Längsachse des Sensors
- X: Drehachse des Pumpenaggregates

## Patentansprüche

1. Drucksensor mit einer Leiterplatte (48), einem an der Leiterplatte (48) angeordneten Messelement und zumindest einem ersten mit dem Messelement (64) verbundenen Fluidkanal (52), welcher sich ausgehend von einer ersten Seite (56) der Leiterplatte (48) durch eine Ausnehmung (54) in der Leiterplatte (48) hindurch zu einer zweiten Seite (58) der Leiterplatte (48) erstreckt und an dieser zweiten Seite (58) der Leiterplatte (48) mit dem Messelement (64) verbunden ist, **dadurch gekennzeichnet, dass** an der Leiterplatte (48) zwei Messelemente (64, 86) für die Druckmessung angeordnet sind, zwischen denen die Leiterplatte (48) eine, sich bis zum Rand der Leiterplatte erstreckende, Aussparung (94) aufweist

2. Drucksensor nach Anspruch 1, **dadurch gekennzeichnet, dass** sich der erste Fluidkanal (52) in einer Richtung quer zu einer Oberfläche der Leiterplatte (48) durch die Ausnehmung (54) hindurch erstreckt.

3. Drucksensor nach Anspruch 1 oder 2, **dadurch gekennzeichnet, dass** die Leiterplatte (48) die Ausnehmung (54) ringförmig, vorzugsweise in einem Winkelbereich von wenigstens 270° umgibt.

4. Drucksensor nach einem der vorangehenden Ansprüche, **dadurch gekennzeichnet, dass** der erste Fluidkanal (52) an der zweiten Seite (58) der Leiterplatte (48) ein Umlenkelement (52b) aufweist, in welchem sich die Erstreckungsrichtung des Fluidkanals (52) ändert und vorzugsweise um 180° ändert.

5. Drucksensor nach einem der vorangehenden Ansprüche, **dadurch gekennzeichnet, dass** der erste Fluidkanal (52) an der zweiten Seite (58) der Leiterplatte (48) ein Umlenkelement (52b) aufweist, in welchem sich die Erstreckungsrichtung des Fluidkanals zweimal um 90° ändert.

6. Drucksensor nach einem der vorangehenden Ansprüche, **dadurch gekennzeichnet, dass** der erste Fluidkanal (52) zumindest einen ersten Kanalabschnitt (52a) aufweist, welcher an der ersten Seite (56) der Leiterplatte (48) gelegen ist, und zumindest einen zweiten Kanalabschnitt (52b) aufweist, welcher an der zweiten Seite (58) der Leiterplatte (48) gelegen ist, wobei der erste Kanalabschnitt (52a) über eine gedichtete Schnittstelle (60) mit dem zweiten Kanalabschnitt (52b) verbunden ist.

7. Drucksensor nach einem der vorangehenden Ansprüche, **dadurch gekennzeichnet, dass** ein an der zweiten Seite (58) der Leiterplatte (48) gelegener zweiter Kanalabschnitt (52b) des ersten Fluidkanals (52) in einem Gehäusekörper (38) ausgebildet ist, welcher Teil eines die Leiterplatte (48) beherbergenden Elektronikgehäuses (36) ist.

8. Drucksensor nach Anspruch 7, **dadurch gekennzeichnet, dass** zumindest derjenige Teil des Gehäusekörpers (38), in welchem der zweite Kanalabschnitt (52b) gelegen ist, einstückig ausgebildet ist.

9. Drucksensor nach einem der vorangehenden Ansprüche, **dadurch gekennzeichnet, dass** das Messelement (64) ein Differenzdruckmesselement mit zwei einander abgewandten Messflächen (66, 68) ist, wobei vorzugsweise eine erste Messfläche (68) zur ersten Seite (56) der Leiterplatte (48) und eine zweite Messfläche (66) zur zweiten Seite (58) der Leiterplatte (48) gewandt ist.

10. Drucksensor nach Anspruch 9, **dadurch gekennzeichnet, dass** der erste Fluidkanal (52) an der ersten Messfläche (68) des Messelementes (64) endet.

11. Drucksensor nach Anspruch 9 oder 10, **gekennzeichnet durch** einen zweiten Fluidkanal (70), welcher an der zweiten Messfläche (66) des Messelementes (64) endet.

12. Drucksensor nach Anspruch 11, **dadurch gekennzeichnet, dass** der zweite Fluidkanal (70) und ein erster Kanalabschnitt (52a) des ersten Fluidkanals in einem gemeinsamen, vorzugsweise einteilig ausgebildeten Sensorkörper (34) angeordnet sind.

13. Drucksensor nach Anspruch 12, **dadurch gekennzeichnet, dass** die Leiterplatte (48) zwischen einem Gehäusekörper (38) des Elektronikgehäuses und dem Sensorkörper (34) gelegen ist.

14. Drucksensor nach einem der Ansprüche 11 bis 13, **dadurch gekennzeichnet, dass** in einem die Leiterplatte (48) beherbergenden Elektronikgehäuse (36) ein dritter Fluidkanal (88) ausgebildet ist, welcher ein an der Leiterplatte (48) angeordnetes Messelement (86) mit der Atmosphäre außerhalb des Elektronikgehäuses verbindet.

15. Drucksensor nach 14, **dadurch gekennzeichnet, dass** der zweite Kanalabschnitt (52b) des ersten Fluidkanals (52) und der dritte Fluidkanal (88) in demselben Gehäusekörper (38) des Elektronikgehäuses und vorzugsweise in einem einstückig ausgebildeten Teil des Gehäusekörpers (38) ausgebildet sind.

16. Drucksensor nach einem der vorangehenden Ansprüche, **dadurch gekennzeichnet, dass** die Aussparung (94) zwischen den Messelementen (64, 86) mit der Ausnehmung (54) der Leiterplatte (48), durch welche sich der Fluidkanal (52) erstreckt, verbunden ist.

17. Pumpenaggregat **gekennzeichnet durch** einen Drucksensor nach einem der vorangehenden Ansprüche, welcher angeordnet ist, einen Druck im Inneren des Pumpenaggregates und insbesondere einen Differenzdruck zwischen Saug- und Druckseite des Pumpenaggregates zu erfassen.

## Claims

1. A pressure sensor with a circuit board (48), with a measuring element which is arranged on the circuit board (48) and with at least one first fluid channel (52) which is connected to the measuring element (64) and which departing from a first side (56) of the circuit board (48) extends through an opening (54) in the circuit board (48) to a second side (58) of the circuit board (48) and is connected to the measuring element (64) at this second side (58) of the circuit board (48), **characterised in that** two measuring elements (64, 86) for the pressure measurement are arranged on the circuit board (48), between which measuring elements the circuit board (48) comprises a recess (94) which extends up to the edge of the circuit board.

2. A pressure sensor according to claim 1, **characterised in that** the first fluid channel (52) extends through the opening (54) in a direction transverse to a surface of the circuit board (48).

3. A pressure sensor according to claim 1 to 2, **characterised in that** the circuit board (48) annularly surrounds the opening (54), preferably in an angular region of at least 270°.

4. A pressure sensor according to one of the preceding claims, **characterised in that** the first fluid channel (52) comprises a deflecting element (52b) at the second side (58) of the circuit board (48), in which deflecting element the extension direction of the fluid channel (52) changes and preferably changes by 180°.

5. A pressure sensor according to one of the preceding claims, **characterised in that** the first fluid channel (52) comprises a deflecting element (52b) at the second side (58) of the circuit board (48), in which deflecting element the extension direction of the fluid channel changes twice by 90°.

6. A pressure sensor according to one of the preceding claims, **characterised in that** the first fluid channel (52) comprises at least one first channel section (52a) which is situated at the first side (56) of the circuit board (48), and at least one second channel section (52b) which is situated at the second side (58) of the circuit board (48), wherein the first channel section (52a) is connected to the second channel section (52b) via a sealed interface (60).

7. A pressure sensor according to one of the preceding claims, **characterised in that** a second channel section (52b) of the first fluid channel (52) which is situated at the second side (58) of the circuit board (48) is formed in a housing body (38) which is part of an electronics housing (36) which accommodates the circuit board (48).

8. A pressure sensor according to claim 7, **characterised in that** at least that part of the housing body (38), in which the second channel section (52b) is situated, is designed as one piece.

9. A pressure sensor according to one of the preceding claims, **characterised in that** the measuring element (64) is a differential pressure measuring element with two measuring surfaces (66, 68) which are away from one another, wherein preferably a first measuring surface (68) faces the first side (56) of the circuit board (48) and a second measuring surface (66) faces the second side (58) of the circuit board (48).

10. A pressure sensor according to claim 9, **characterised in that** the first fluid channel (52) ends at the first measuring surface (68) of the measuring element (64).

11. A pressure sensor according to claim 9 or 10, **characterised by** a second fluid channel (70) which ends at the second measuring surface (66) of the measuring element (64).

12. A pressure sensor according to claim 11, **characterised in that** the second fluid channel (70) and a first channel section (52a) of the first fluid channel are arranged in a common sensor body (34) which is preferably designed as one part.

13. A pressure sensor according to claim 12, **characterised in that** the circuit board (48) is situated between a housing body (38) of the electronics housing and the sensor body (34).

14. A pressure sensor according to one of the claims 11 to 13, **characterised in that** a third fluid channel (88) which connects a measuring element (86) which is arranged on the circuit board (48) to the atmosphere outside the electronics housing is formed in an electronics housing (36) which accommodates the circuit board (48).

15. A pressure sensor according to claim 14, **characterised in that** the second channel section (52b) of the first fluid channel (52) and the third fluid channel (88) are formed in the same housing body (38) of the electronics housing and preferably in a part of the housing body (38) which is designed as one piece.

16. A pressure sensor according to one of the preceding claims, **characterised in that** the recess (94) between the measuring elements (64, 86) is connected to the opening (54) of the circuit board (48), through which opening the fluid channel (52) extends.

17. A pump assembly **characterised by** a pressure sensor according to one of the preceding claims, which is arranged to detect a pressure in the inside of the pump assembly and in particular a differential pressure between the suction side and the delivery side of the pump assembly.

## Revendications

1. Capteur de pression comprenant un circuit imprimé (48), un élément de mesure disposé sur le circuit imprimé (48) et au moins un premier canal pour fluide (52) relié à l'élément de mesure (64), qui s'étend à partir d'un premier côté (56) du circuit imprimé (48) à travers une ouverture (54) dans le circuit imprimé (48) vers un deuxième côté (58) du circuit imprimé (48) et est relié, sur ce deuxième côté (58) du circuit imprimé (48), à l'élément de mesure (64), **caractérisé en ce que** deux éléments de mesure (64, 86) pour la mesure de pression sont disposés sur le circuit imprimé (48), entre lesquels le circuit imprimé (48) comprend un évidement (94) s'étendant jusqu'au bord du circuit imprimé (48).

2. Capteur de pression selon la revendication 1, **caractérisé en ce que** le premier canal pour fluide (52) s'étend à travers l'ouverture (54) dans une direction transversale à une surface du circuit imprimé (48).

3. Capteur de pression selon la revendication 1 ou 2, **caractérisé en ce que** le circuit imprimé (48) entoure l'ouverture (54) de façon annulaire, de préférence dans une plage d'angles d'au moins 270°.

4. Capteur de pression selon l'une des revendications précédentes, **caractérisé en ce que** le premier canal pour fluide (52) comprend, sur le deuxième côté (58) du circuit imprimé, un élément de renvoi (52b) dans lequel la direction d'étendue du canal pour fluide (52) change et, de préférence, change de 180°.

5. Capteur de pression selon l'une des revendications précédentes, **caractérisé en ce que** le premier canal pour fluide (52) comprend, sur le deuxième côté (58) du circuit imprimé (48), un élément de renvoi (52b) dans lequel la direction d'étendue du canal pour fluide change deux fois de 90°.

6. Capteur de pression selon l'une des revendications précédentes, **caractérisé en ce que** le premier canal pour fluide (52) comprend au moins une première section de canal (52a) qui est située sur le premier côté (56) du circuit imprimé (48), et au moins une deuxième section de canal (52b) qui est située sur le deuxième côté (58) du circuit imprimé (48), la première section de canal (52a) étant reliée à la deuxième section de canal (52b) par une jonction étanche (60).

7. Capteur de pression selon l'une des revendications précédentes, **caractérisé en ce qu'**une deuxième section de canal (52b) du premier canal pour fluide (52) située sur le deuxième côté (58) du circuit intégré (48) est formé dans un corps de boîtier (38) qui est une partie d'un boîtier électronique (36) hébergeant le circuit imprimé (48).

8. Capteur de pression selon la revendication 7, **caractérisé en ce qu'**au moins la partie du corps de boîtier (38) dans laquelle la deuxième section de canal (52b) est située, est formée d'une seule pièce.

9. Capteur de pression selon l'une des revendications précédentes, **caractérisé en ce que** l'élément de mesure (64) est un élément de mesure de pression différentielle avec deux surfaces de mesure (66, 68) opposées l'une à l'autre, une première surface de mesure (68) étant orientée de préférence vers le premier côté (56) du circuit imprimé (48) et une deuxième surface de mesure (66) vers le deuxième côté (58) du circuit intégré (48).

10. Capteur de pression selon la revendication 9, **caractérisé en ce que** le premier canal pour fluide (52) se termine à la première surface de mesure (68) de l'élément de mesure (64).

11. Capteur de pression selon la revendication 9 ou 10, **caractérisé par** un deuxième canal pour fluide (70) qui se termine à la deuxième surface de mesure (66) de l'élément de mesure (64).

12. Capteur de pression selon la revendication 11, **caractérisé en ce que** le deuxième canal pour fluide (70) et une première section de canal (52a) du premier canal pour fluide sont disposés dans un corps de capteur (34) commun, formé de préférence d'une seule pièce.

13. Capteur de pression selon la revendication 12, **caractérisé en ce que** le circuit imprimé (48) est situé entre un corps de boîtier (38) du boîtier électronique et le corps de capteur (34).

14. Capteur de pression selon l'une des revendications 11 à 13, **caractérisé en ce que**, dans un boîtier électronique (36) hébergeant le circuit intégré (48), est formé un troisième canal pour fluide (88) qui relie un élément de mesure (86) situé sur le circuit intégré (48) à l'atmosphère à l'extérieur du boîtier électronique.

15. Capteur de pression selon la revendication 14, **caractérisé en ce que** la deuxième section de canal (52b) du premier canal pour fluide (52) et le troisième canal pour fluide (88) sont formés dans le même corps de boîtier (38) du boîtier électronique et, de préférence, dans une partie du corps de boîtier (38) formée d'une seule pièce.

16. Capteur de pression selon l'une des revendications précédentes, **caractérisé en ce que** l'évidement (94) entre les éléments de mesure (64, 86) est relié à l'ouverture (54) du circuit imprimé (48) par laquelle le canal pour fluide (52) s'étend.

17. Groupe motopompe **caractérisé par** un capteur de pression selon l'une des revendications précédentes, qui est configuré pour capter une pression à l'intérieur du groupe motopompe et en particulier une pression différentielle entre un côté d'aspiration et un côté de refoulement du groupe motopompe.
